# EUROPEAN PATENT APPLICATION

(11) **EP 2 485 128 A2**
(43) Date of publication of application: **08.08.2012**
(21) Application number: 10796133.6
(22) Date of filing: 29.09.2010
(51) Int. Cl.: G06F 3/044, G06F 3/041, G06F 3/01

(54) **METHOD AND DEVICE FOR HIGH-SENSITIVITY MULTI POINT DETECTION AND USE THEREOF IN INTERACTION THROUGH AIR, VAPOUR OR BLOWN AIR MASSES**

(30) Priority: 29.09.2009 PT 10476509; 01.02.2010 PT 10495210
(71) Applicant: Edigma.com SA, 4710-167 Braga (PT)
(72) Inventor: REIS BARBOSA, Afonso Manuel, P-4720-122 Rendufe, Amares (PT); FERNANDES MARQUES, Pedro Luís, P-4805-209 Longos - Guimarães (PT); MAGALHÃES FONSECA, Miguel Ângelo, P-4715-338 Braga (PT); FERNANDES PEIXOTO DE OLIVEIRA, José Miguel, P-4450-676 Matosinhos (PT); AMARAL RODRIGUES, Rui Pedro, P-BRAGA 4705-707 (PT); MAGALHÃES SANTOS, Nuno Filipe, P-4710 - 088 Braga (PT); DA CUNHA TRABULO, Pedro Miguel, P-4700-383 Braga (PT); BARBOSA, João Paulo, P-4715-350 Braga (PT)
(74) Representative: Ferreira, Maria Silvina
(86) International application number: PCT/IB2010/054397
(87) International publication number: WO 2011/039713

(57) **Abstract**

The present invention refers to a method and device for low latency multipoint control and detection applied to, for example, a capacitive grid (111). The grid consists of a series of conductive microfilaments (101-110), placed between two transparent plates or layers, arranged in interconnected rows and columns forming a matrix. The electromagnetic field reading, which was created in the grid's vicinity, enables the detection of objects which are in the vicinity of or in contact therewith. The invention shows high sensitivity enabling the detection of electrically-loaded air and/or vapour, more specifically the detection of intensity, direction and location of an expelled air or vapour mass, also providing a simultaneous touch detection.

The present invention is useful in boosting interaction capacities between systems and users, the invention being also possibly applied in detection/interaction systems (either simultaneous, or not). These systems might be applied, for example, in entertainment, control and measuring situations.

## Description

### Technical Domain of the invention

The present invention refers to a method and device for low latency and high sensitivity multipoint control and detection applied to, for example, a capacitive grid, preferably presenting high proportions. The herein solution allows electromagnetic field reading, which was created in the said grid's vicinity, enabling the detection of several objects which are near or in contact therewith. The invention will have preferable application in areas such as human/computer interaction and cooperative work in large interaction areas, using electronics technology based on capacitive phenomena and high-frequency control circuits, as well as software elements for controlling said circuits and for processing the data obtained.

### Summary

The high sensitivity, speed and ability for disentanglement achieved by the present invention give namely way to an interaction among systems, also through objects as light as air, vapour and blow masses (504'), thus determining actions by detecting pressure, intensity, dimension, direction, location, movement patterns and sequences, duration or rate time thereof.

The present invention describes a device for low latency multipoint detection in capacitive grids comprising a surface, designated capacitive grid (111), comprising at least two sets of conductors, wherein each set comprises one or more isolated conductors (101-105, 106-110), wherein the conductors of each set do not intercept each other, but conductors from different sets do intercept, without a direct electrical contact; and a circuit for detecting capacity changes on the crosspoint between two conductors from different sets (112), during the approach or contact of an object (710), namely a finger, and comprising:
- a signal transmitter comprising:
   - a time-variable signal injector (1008);
   - demultiplexer (1007) for selecting a conductor from a first set, whereto the signal will be injected;
- signal receiver and detector comprising:
   - demultiplexer (1010) for selecting another conductor from a second set wherein the injected signal is to be detected;
   - signal amplifier (1009):
   - demodulator or rectifier which converts the signal into a voltage;
   - analogue-to-digital converter (1012), which converts the voltage into a numeral reading.

A preferred embodiment of the present invention provides that the signal receiver further comprises a resistive-capacitive RC high-pass filter, which uses its own capacity between the two selected conductors.

In another embodiment of the present invention, the injected signal is an alternate and sine wave signal, with an average null value or null root-mean-square value between 50 and 300 KHz, having peak-to-peak amplitude between 10 to 24 volts.

Still in another preferred embodiment of the invention, the analogue-to-digital converter (1012) is configured to operate in differential mode, using as analogue-to-digital conversion reference (1015), one or more prereadings from each conductive pair intercept.

In a more preferred embodiment of the invention, the analogue-to-digital conversion reference comprises two voltages, minimum (1303) and maximum (1304), which are independent for each conductor pair intercept, obtained from two or more prereadings.

In a still more preferred embodiment of the present invention, the signal is injected into a given conductor, the remainder conductors are either disconnected, or maintained under high impedance or at a continuously steady voltage.

The present invention still describes a method for low latency multipoint detection in capacitive grids comprising the detection of capacity changes in the vicinity of one or more crosspoints (112), each one being arranged between two isolated electrical conductors, upon the approach or contact of an object (710), namely a finger, or upon the approach or contact of an object (710) along a trail, namely a finger; on a surface, designated capacitive grid (111) comprising at least two sets of conductors (101-105, 106-110),wherein each set comprises one or more isolated conductors, wherein the conductors of each set do not intercept each other, but conductors from different sets intercept, without a direct electrical contact; and comprising the following steps:
- selecting a first conductor (901) from a first set of conductors;
- injecting a time-variable signal;
- selecting a second conductor (901) from a second set of conductors;
- amplifying and rectifying the signal obtained (902) in the second conductor;
- converting the signal into digital and sending it to processing steps (903);
- selecting a further second conductor among the second set of conductors and repeating steps until enough information corresponding to the first conductor (906) has been obtained;
- selecting a further first conductor among the first set of conductors and repeating steps until enough information corresponding to the capacitive grid (907) has been obtained;

Still in another preferred embodiment of the present invention, the analogue-to-digital converter (1208) is configured to operate in differential mode (1209), using as analogue-to-digital conversion reference (1211), two voltages, a minimum and a maximum voltage, which are independent for each conductor pair intercept obtained from one or more prereadings.

The present invention describes a method for system interaction by means of air, vapour and blow masses (504') comprising action determination by detecting pressure, intensity, dimension, direction, localization, movement patterns and sequences, duration or rate time of said air, vapour or blow masses (504').

The present invention further describes a method for detecting electrically-loaded (505') air, vapour, or blow masses (504') characterized in that it detects the capacity variation caused by said air, vapour or blow masses onto a capacitive grid (502').

A preferred embodiment of the present invention determines pressure, intensity, dimension, direction, location, movement patterns and sequences, duration or rate time of said air, vapour or blow masses (504'), by means of detecting the place of the capacity change, or changes, in the said grid's (502') capacity (206').

### Background of the invention

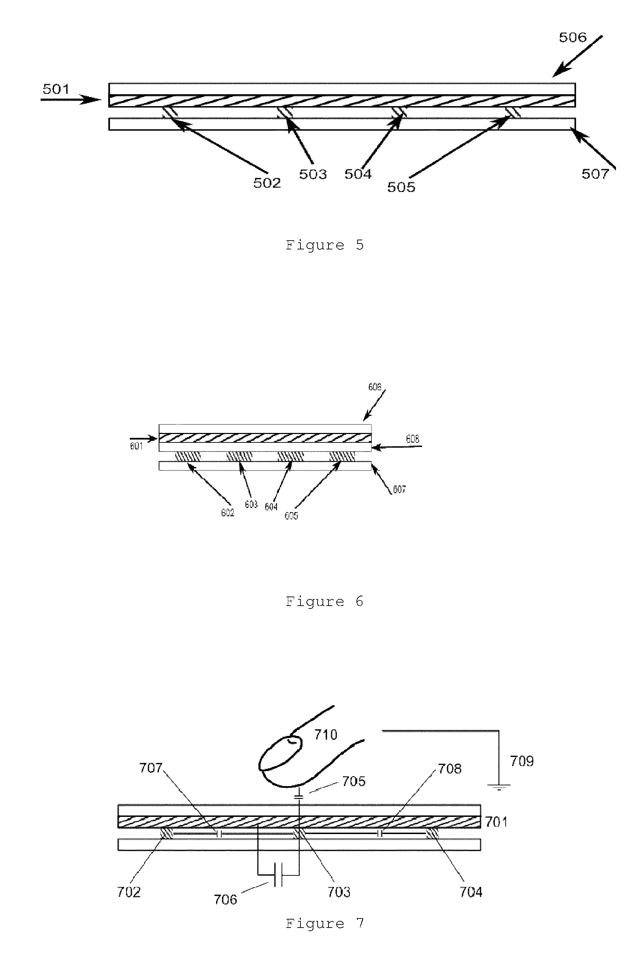

The capacitive technology for touch detection is widely used in different types of screens (touchscreens) and devices wherein external interaction is required (examples: keyboards, control panels, touch switches). Modern methods operate essentially on the following basis:
- Track grids or highly-thin metal wires (fig. 5) or conductive and transparent tracks (fig. 6), woven in rows and columns;
- "*sensing*" or detection control system which sends current through rows and columns and detects for each row and each column the amount of uncharged power;
- Signal processing system which processes information collected and categorizes it in order to send it to a host system:
- Conversion system which, upon processed values on row and column intensity, determines the column and row having the maximum values, and converts said column and row into on-screen coordinates, by means of a previously-calculated translation by calibration.

However, these techniques have one or several of the following drawbacks:
- Only one touch point is liable to be detected;
- In some cases, a maximum of two touch points are liable to be detected;
- When more than two points are liable to be detected, a screen size limitation occurs;

The reasons behind these drawbacks are substantially related to capacitive phenomena and to the way in which the electromagnetic field information is captured. In order to achieve a multipoint capture using capacitive technology and using the same grids, the capture techniques must be substantially different from those currently used, as well as the signal processing methods applied to the information collected from sensorial components.

Two important factors in touch technologies are bulkiness and response time. Both affect user's perception, and determine the system's usability. For a successful multitouch system, the system's detection of multiple touch points is not sufficient, but rather doing so sturdily (exempt from false positive or false negative) and without perceptible delays from touch moment to the moment wherein a response from the system is obtained (low latency). Furthermore, if a continuous processing of touch points is required (for example, following the touch point through time, in order to identify specific trails or movements), the system's latency should be low so that sufficient grid scanning might be performed thus allowing the said processing to occur and which sets a latency as imperceptible to the user as possible.

The present invention also refers to the effects of air and/or vapour exhalation (hereinafter designated blow) onto a capacitive grid and reading methods of charge variations caused onto the capacitive grid, thus allowing a detection of several objects in the vicinity of or in contact with the said grid, either with grounding or non-grounding lead, and simultaneously allowing the exhalation detection of air and/or vapour (hereinafter designated blow) onto the said grid.

An air and/or vapour mass is a body having no grounding lead but being electrically positive under certain conditions, namely under previous friction of its water particles against a solid body.

Such facts were confirmed by John Williams in 1841 and Michael Faraday in 1843.

Within the scope of the present invention, a body having no grounding lead and being normally electrically positive is to be understood as an air and/or vapour mass created by exhaling from a living being (for example, a human) or from vaporizers or other devices or systems which electrically charge the mass thus obtained, by means of particle friction from ionisable liquids (example: water particles within the vapour obtained).

### General description of the invention

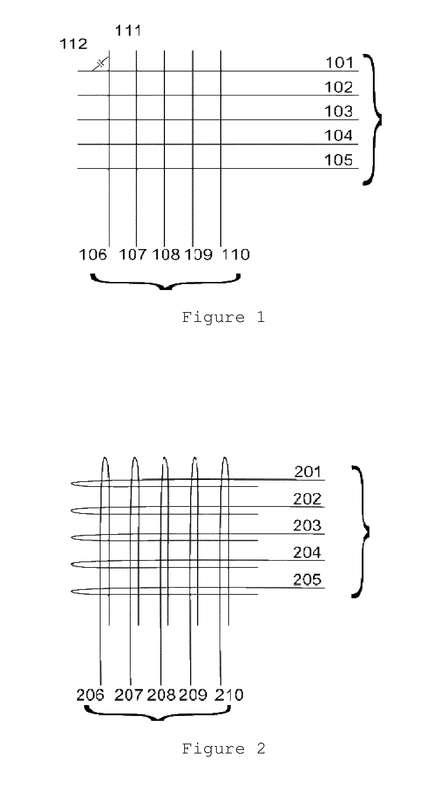

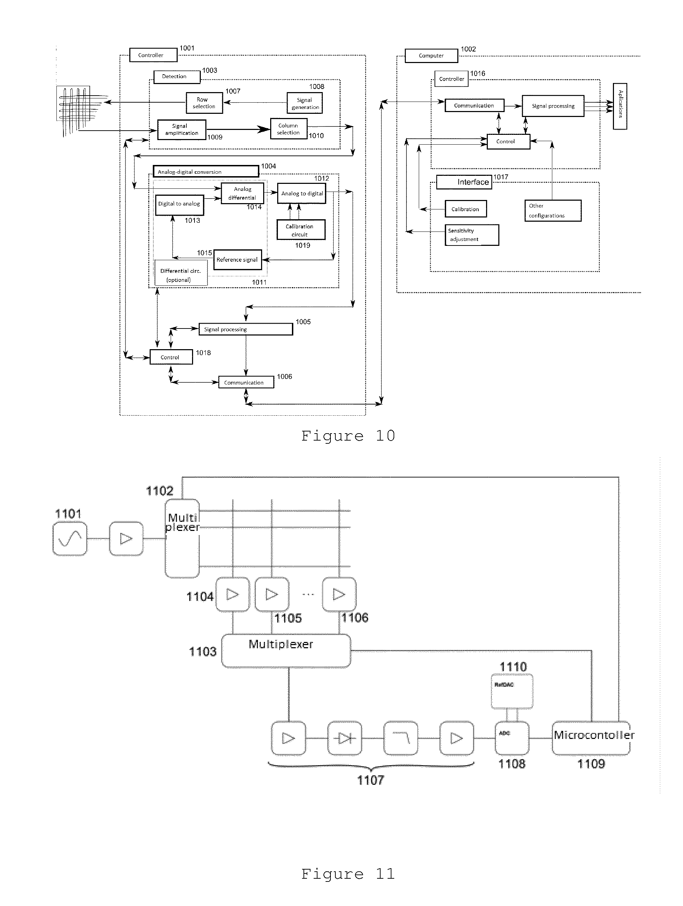

The present invention allows carrying out the electromagnetic field reading, which was created in a capacitive grid's vicinity (fig. 1), preferably presenting high proportions, thus enabling the detection of several objects which are near or in contact with the said grid. In order to make the reading of each movement or touch onto the grid or its vicinity possible, a controller (1001) was used consisting of four main circuits ("*Sensing*" or detecting (1003), converting (1004), signal processing (1005) and communicating (1006)), as well as a computer (1002) mainly responsible for undertaking adjustments and calibrations of the information transmitted from the controller (1001) (fig. 10).

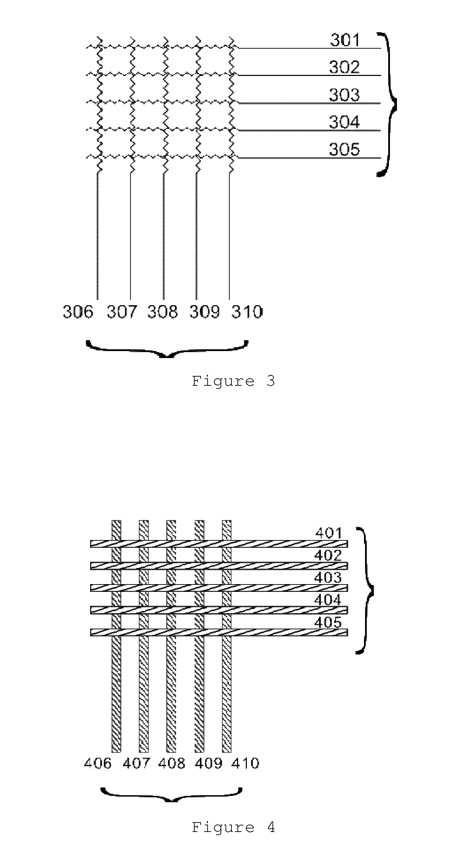

The present invention allows carrying out an electromagnetic field reading, which was created in a capacitive grid's vicinity (111) (fig. 1), preferably a grid presenting high proportions, thus enabling the detection of several objects which are near or in contact with the said grid. The grid type used consists preferably of a series of coated conductive microfilaments (101, 102, 103, 104, 105, 106, 107, 108, 109, 110, 201, 202, 203, 204, 205, 206, 207, 208, 209, 210, 301, 302, 303, 304, 305, 306, 307, 308, 309, 310, 501, 502, 503, 504, 505, 701, 702, 703, 704) (figs. 1, 2, 3, 5 e 7), arranged between two transparent plates or layers (506,507,606,607,608), such as polymer films, arranged in rows and columns (evenly or unevenly distributed), which intercept each other thus forming a matrix. The material does not have to be necessarily transparent and the filaments may consist of wires or other conductive material (401, 402, 403, 404, 405, 406, 407, 408, 409, 410, 601, 602, 603, 604, 605) (figs. 4 and 6) (ex: Indium Tin Oxide (ITO), antimony tin oxide (ATO)). The filament arrangement must follow the proximate geometry to rows and columns (fig 1). However, one row or column might be formed by one filament arranged in zigzag orientation or any other way which covers as much desired operation area as possible for such row or column (fig. 1, 2, 3, 4). In order to capture information from the electromagnetic field, the intercept between a determined row and column is firstly considered as a capacitor (112) (fig 7). Said "mixed" capacitor consist of the direct capacitor between the selected row and column (706), of capacitors formed between selected row and column and adjacent rows and columns (707,708), of capacitors formed between adjacent columns and rows and following rows and columns and so forth. The selected row and column act as electrodes of the said "mixed" capacitor (fig 7). In order to simplify information collection, a triggering signal (1008, 1101, 1201) is injected having specific features (hereinafter detailed) in such electrodes (e.g. row) according to a predetermined selection made by an inlet multiplexer (1007, 1102, 1202), which will result in a charge and discharge of the said capacitor, thus creating an electromagnetic field which will in turn create an electrical current on the second electrode (in this case, a column). Such electromagnetic field shall be affected by immediacy of objects (for example a finger (710), optionally in contact with a grounding lead (709)), which in electrical terms adds one capacitor (705) to the "mixed" capacitor (fig 7), thus resulting in the alteration e.g. of the amplitude in the signal created in the second electrode. This sign variation in amplitude, for example, will be used as an indicator of the immediacy or touch onto the intercept point of said row and column. In order to measure such variation, a signal amplitude conversion in the second electrode is carried out into a voltage differential in a housing circuit (1107, 1207) (demodulation). Based on this voltage, a conversion of voltage into digital (1004) is applied using an analogue-to-digital converter (ADC) (1012, 1108). Optionally, a differential circuit may be applied (1014, 1208), allowing the compensation of values obtained from ADC outlet with a corrective factor (1011) based on a previous reading.

The analogue-to-digital conversion is governed by two reference voltages defining the interval between analogue values which will act as minimum and maximum limits of conversion.

In order to optimize the ADC conversion precision (1108, 1208), the use of a calibration circuit is proposed (1019) which, by means of using a DAC (1110, 1211), defines for each intercept the admissible value range for conversion by the ADC(1108, 1208).

However, as previously said, one problem inherent to signal reading as touch reaction is low latency. Unlike technologies existing in the market, which undertake several readings at a same intercept so as to obtain a stable reading, being therefore time-consuming, the present technique only requires one reading, compensating eventual subsequent variations on controller firmware and/or computer, using different techniques (for example, by the calculation of a mean value for each cell, active dynamic filter application).

Sensing or detection circuit (1003) allows locally detecting the immediacy or contact of objects with intercept points in the matrix forming them.

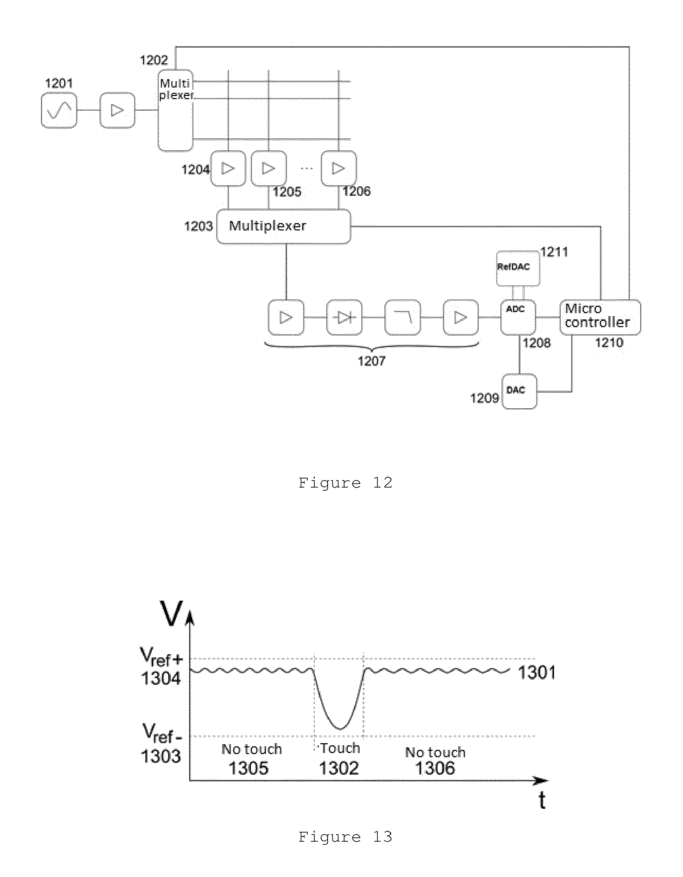

The electrical triggering signal (signal features) meant to be injected into the rows (fig. 11, 12) comes from a wave signal generator apparatus (1008,1101,1201), preferably a sine wave signal, between 50 and 300 KHz, having a peak-to-peak amplitude between 10 to 24 volts (-5 to +5 volts or - 12 to +12 volts with average point at 0 volts). The sensitivity and range of the electromagnetic field generated might be manipulated by frequency and amplitude variation from the signal generator. In the wave signal generator circuit, the frequency variation might be manually adjusted using fixed or variable capacitors or it might be digitally adjusted, should digital capacitors be applied. In the same circuit, the amplitude variation might be manually adjusted using variable resistors, or it might be digitally adjusted, should digital resistors be applied.

The row selection for signal injection is made possible by using an inlet multiplex circuit (1007, 1102, 1202) (fig. 11, 12) which, by means of its addressing and control inlets, actuates a given row, the remainder rows being kept deactivated ("*tri-stated*", or high impedance). Alternatively, the rows which are not used may receive a continuous component, that is, DC. Likewise, the column selection for obtaining the final analogue signal associated with the selected row-column intercept is made possible by also using a multiplex circuit (1010, 1103, 1203). The signal at the multiplex circuit's outlet (1010, 1103, 1203) goes through a rectification and housing circuit (1107, 1207), so as to convert the signal amplitude difference into voltage difference.

The receiving and amplifying circuit in each column (1009, 1104, 1105, 1106, 1204, 1205, 1206) is preferably formed by a RC mesh (wherein the capacitor is formed by selected column and row) in high-pass filter configuration, wherein the spreading resistance to the capacitor (fig. 7) (calculated by the injected frequency and capacitor value) forms a voltage divisor with the RC mesh resistance, which will feed an amplifier in non-inversion mode. All columns (1104, 1105, 1106, 1204, 1205, 1206) have at their outlets an identical circuit to that previously described which are in turn connected to the outlet multiplexer circuit (1010,1103,1203)(allowing the selection of outlet signal from a specific column). This multiplexer circuit (1010,1103,1203) has two RC meshes at its outlet, both in low-pass filter configuration, a voltage associated to the amplitude in electrical current at the column's outlet being then obtained(1107, 1207) (rectification). In order to convert the voltage value, or voltage difference in the case of a differential operation, into a digital value, for subsequent processing of digital signal, an analogue-to-digital circuit (1004) is further provided, which converts the signal using an ADC converter (1012,1108), wherein the circuit's power supply is used as reference range (for example, 0 volts as inferior limit and 5 volts as superior limit), or a voltage reference applied by components which are external to the microcontroller(1018,1109,1209) or programmatically (internal to the microcontroller). Optionally, aiming for the levelling of the converting signal, so as to make the most of the ADC reference range, the ADC is used in differential mode (1014,1208)(fig. 12).

Notwithstanding the ADC operation mode whilst touch detection, it is used in normal mode in initializing stage (801), wherein a table is obtained (802) with the reference values for the matrix interception points. The table will be used for smoothing algorithms and optionally for one of the differential ADC inlets (1208). In differential mode(fig. 12), the ADC (1014,1208) receives, at one inlet, the signal from the selected column and, at the other inlet, receives a DAC output (1013,1209) which in turn presents at its inlet the reference value (1015) from the matrix interception points, obtained from the table which was generated at the initializing stage (801). In order to calculate the differential between the analogue signal and the signal which was captured, the difference between the selected column signal and the reference value at the DAC outlet is used (1013, 1208).

The analogue-to-digital conversion is governed by two reference voltages defining the interval between analogue values which will act as minimum and maximum limits for the conversion.

In order to optimize the ADC conversion precision (1108, 1208), the use of a calibration circuit is proposed (1019) which, by means of using a DAC (1110, 1211), defines for each intercept the admissible value range for conversion by the ADC (1108, 1208).

Given the grid features, the voltage values (1301), maximum (when no touch occurs (1305, 1306), that is, the "mixed" capacitor is charged) and minimum (when touch occurs (1302), that is, the "mixed" capacitor is discharged) are different for each intercept.

When a pair of reference values (Vref+(1304) and Vref-(1303)) is exclusively defined for the conversion of all intercepts, the interval defined must be wide enough in order to comprise all limits of all intercepts, the conversion precision being thus lost. In order to optimize the conversion precision, the reference values (Vref-(1303) and Vref+(1304)) must be independently determined for each intercept.

The determination of reference values (1303, 1304) for each intercept is carried out similarly to that of the differential circuit (1011), that is, by calibration using values read on the grid, which was generated in the initializing stage (801).

The calibration process for reference values (1303, 1304) of a given intercept is carried out by successive approximation, defining an initial reference voltage value which is adjusted until a valid ADC reading is obtained (1108, 1208).

When a valid value is achieved, it shall be one of the reference voltage values for such intercept. The second reference voltage value depends on the first value found, so as to comprise all signal variation to conversion (1301).

These values are stored in a reference table so that they might be subsequently used in touch detection stage in ADC parameterization (1108, 1208), by means of using the DAC (1110, 1211).

These values may be updated periodically or continuously by recalibration in idle periods or by means of dynamic adjustment upon grid use.

A digital signal processing circuit (1005) is also to be observed, which allows decreasing noise from smoothing and parameterizing the ADC (1012,1014,1108,1208) into resolutions which best apply to the signal and noise level (optionally, it also allows the supervision of reference signal and DAC operation (1013,1209)).

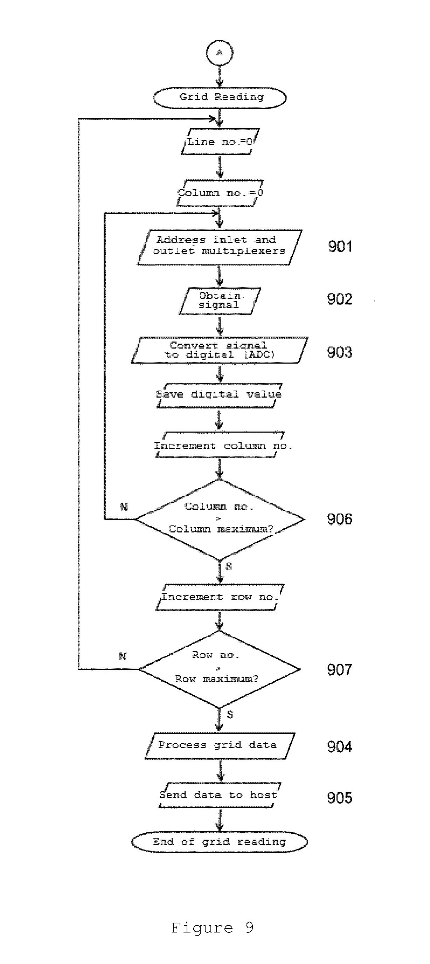

This reading process of row-column intercept is undertaken for all grid intercepts, following the subsequent process (fig 9):
- For each row(907):
   - On the inlet multiplexer(1007,1102,1202), the row corresponding to the desired row-column intercept is selected (901), wherein the triggering signal will be injected
   - For each column (906):
      - The signal charges the capacitors which were created between such rows and columns
   - Amplifying stages increase the signal obtained at the column's outlet
   - On the outlet multiplexer (1010,1103,1203), the column corresponding to the desired row-column intercept is selected
   - The outlet on the multiplexer (1010,1103,1203) goes through the rectifying circuit (1107,1207)
   - The rectified signal (902) enters the ADC (1012,1014,1108,1208), is converted into a digital value (903) and is sent to the microcontroller (1018,1109,1210)
- If necessary, the values read on the grid (904) are pre-processed
- the values read on the grid (905) are sent to the computer

In order to process the signal, signal digital processing algorithms are used which are encoded on the firmware and programming of the microcontroller (1018, 1109, 1210). Afterwards, the communicating circuit (1006) prepares the digital information gathered in order to send it to a host system or computer (1002) using, for example, a structured USB technology.

USB communication further implements the device enumeration so that it might be recognized by the host system (computer) (1002), which is dully associated to the controller (driver) (1016) installed therein and which divides the matrix point set values into packages, thus sending them to the host system (1002). Furthermore, the transmission synchronization of such packages is also executed, for example, by sending control packages and receiving control packages from the host system (1002), comprising values for parameterizing the device (1001). It should be mentioned that such values may parameterize, for example, the frequency and amplitude of the signal generator circuit, the yield from signal amplifying steps, the smoothing / signal noise decrease and analogue-to-digital conversion precision (1017).

A possible and preferable algorithm for the information processing which is obtained from the grid is hereinafter described. After receiving each frame (matrix with readings from the grid) in digital form, a processing of such information is executed in order to decrease noise, detect touch points and carry out a tracking of such points.

The processing is divided into several stages, although not limited thereto.

Stages for touch point detection:
- Thresholding: values, which are inferior to a minimum value, are considered residuals and are invalidated;
- Moving Average in Time Filter: Each value in each position (x, y) is corrected by average considering the last n readings for each point. The aim of this step is to compensate for isolated peak caused by noise (temporal coherence basis).
- Thresholding, detection by thresholding, per column: given the circuit's nature, when a touch occurs on a certain column, all values in such column are affected in a progressive manner. It also increases the errors, an elimination of such values inferior to a given percentage of the column's maximum value being undertaken.
- Smoothing: furthermore, a smoothing may be applied in order to further reduce the noise from interferences, thus exploiting spatial coherence. Low-pass filters, such as Gaussian filter, neighbouring point average or median, are examples of such algorithms.
- Identification of possible touch areas: subsequent to the filtering carried out in previous stages, contiguous areas of the matrix having relevant readings are identified. For each continuous area, its mass centre and extension are calculated. Should its value be significant (i.e. above a given maximum level) a touch point occurrence corresponding to the mass centre is considered.

Stages for touch point tracking:
- Upon information from touch points detected in the previous stage, a tracking thereof is undertaken, the same being stored as trails
- On the initial stage, there is no trail
- A touch point occurring in isolated manner results in a new trail
- In subsequent moments, each new touch point is compared to existing trails on the previous moment. If the touch point is sufficiently adjacent to an existing trail, it is added to the trail. If the touch point is not sufficiently adjacent to a trail, it results in a new trail
- In each moment, trails lacking the addition of a new point are considered as finalized and are removed from the list of existing trails

The information on new trail, new point addition and end of trail may be sent to different applications, namely as operating system events which notifies applications of such events or as a command sequence which is read by the application from a well-defined communication port.

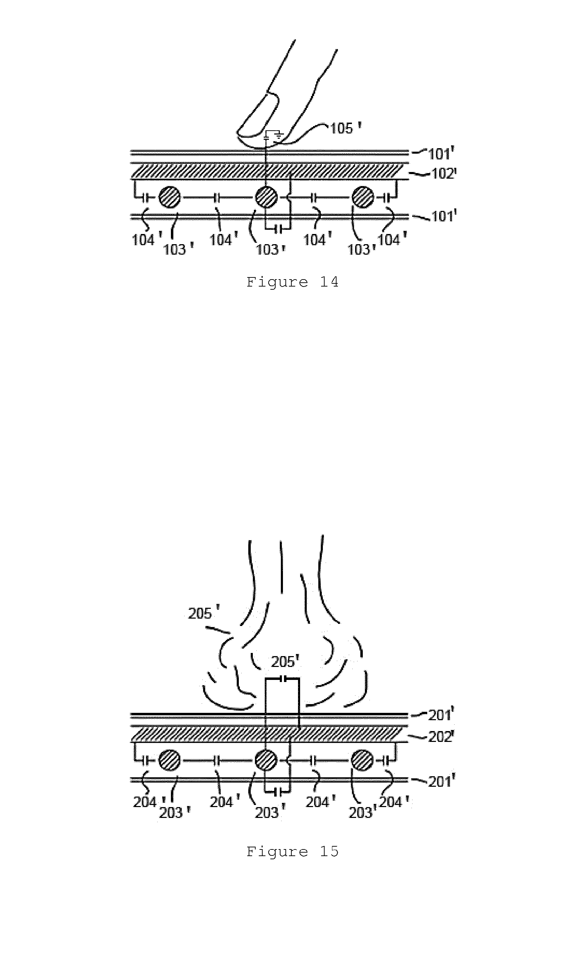

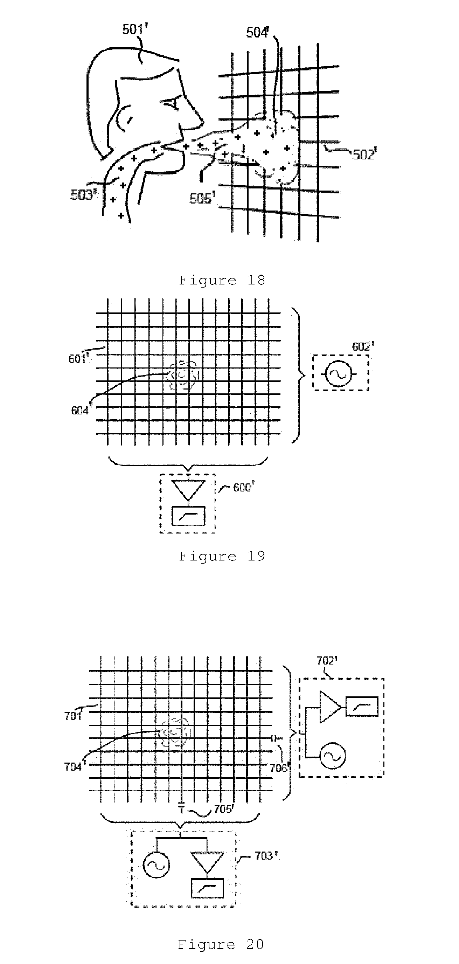

The present invention refers to the effects of air and/or vapour exhalation (hereinafter designated blow) onto a capacitive grid (fig 18) and reading methods of charge variations caused onto the capacitive grid, thus allowing a detection of several objects in the vicinity of or in contact with the said grid (fig 14), and simultaneously allowing the exhalation detection of air and vapour (hereinafter designated blow) onto the said grid (fig 15).

Touch detection and air and/or vapour exhalation detection may be actuated for simultaneous or independent operation.

According to the principle inherent to capacitor behaviour and capacitive charges, the detection of approaches or touches of one or more objects onto the grid is based on the variation of the capacitive charge which is induced by such approaches or touches.

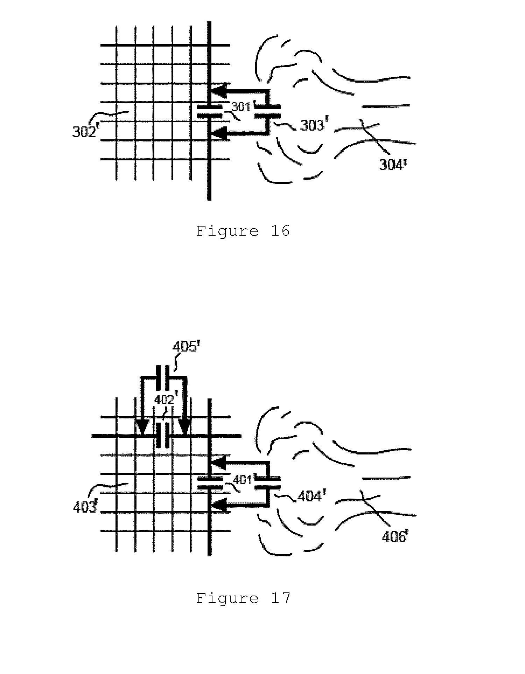

Such objects, which might be fingers, hands or other objects handled by one or more people, add a capacitor (105'), with grounding lead, to the "mixed" capacitor (104') (formed between rows and columns), thus resulting in a decrease of charge capacity of said "mixed" capacitor (104') and consequently, in a reading of an inferior current value at the "mixed" capacitor's outlet (104', 204') compared to the current value existing in idle state. If the added capacitor is altered, thus being in parallel connection with the "mixed" capacitor (206', 303', 404', 405'), and increasing its charge capacity, the later will be boosted, that is, an increase on the current value at the "mixed" capacitor's outlet will therefore be made possible during discharge thereof, when compared to the current value existing in idle state (without the added capacitor). Such configuration, in which the added capacitor is connected to the "mixed" capacitor, may be obtained, for example, with the approach or touch from bodies (304', 406') which do not imply grounding lead and which are electrically positive (fig 16, fig 17).

Within the scope of the present invention, a body (205') having no grounding lead and being electrically positive is to be understood as an air and/or vapour mass created by exhaling from a living being (for example, a human) or from vaporizers or other devices or systems which electrically charge the mass thus obtained, by means of particle friction from ionisable liquids (example: water particles within the vapour obtained).

In normal situations, the static electrical charge is positive, but the present invention might be easily configured to detect negative charges, should the circumstances require so.

Therefore, taking human exhalation as an example, be it by exhaling or blowing, a vapour mass is created which is positively charged due to the friction occurred between water particles and the walls along the path from pulmonary alveolus to the mouth.

If this vapour mass is directed to the capacitive grid, the charge capacity on the grid locations affected by the vapour mass increases, thus also increasing the current value at the "mixed" capacitor' outlet corresponding to such locations.

Subsequently, the charge capacity in grid locations, which were affected by the vapour mass, returns to stationary values upon evaporation.

Exhalation detection (or vapour mass) onto the capacitive grid is undertaken by measuring the capacitive charge present in rows and columns forming the grid - for horizontal and vertical measuring systems -, or capacitive charge present in rows and columns forming the capacitive grid - for point-to-point measuring systems.

One example for horizontal and vertical measuring systems could be a circuit considering rows and columns as independent capacitors and thus obtaining values for rows and columns. Taken that the grid reading is limited to those charge values present in each row and each column (instead of those present in each intercept point therebetween), a touch might be obtained (or two simultaneously, with the aid of firmware or software). In the case of exhalation or mass detection, it is possible to obtain the position wherein it collides with the grid, since a row (or more consecutive rows) and a column (or more consecutive columns) will indicate the coordinates of such position, as well as touch detection results are presented. The differentiation between touch and exhalation is based on the fact that the results from one will be opposed to those of the other, that is, if touch returns a value inferior to the idle value, exhalation from the mass will return a value above the idle value and vice-versa.

One example for point-to-point measuring system is a circuit considering intercepts between rows and columns as "mixed" capacitors and thus obtaining values for such intercepts eventually achieving a value matrix. Such reading allows directly detecting several simultaneous touches. In the case of exhalation or mass detection, it is possible to recognize the column (or row) wherein it collides with the grid, instead of the direct position, since the charge capacity addition effect is added to the entire column (or row corresponding to the outlet pole of the "mixed" capacitor). Subsequently, multiplex or switching methods might be used in order to overcome such limitation. The differentiation between touch and exhalation is based on the fact that the results from one will be opposed to those of the other, that is, if touch returns a value inferior to the idle value, exhalation from the mass will return a value above the idle value and vice-versa.

Notwithstanding the detection system used, the mass exhalation intensity is directly obtained and, by means of history means within the receiving systems of the read values, the direction thereof is obtained. The data thus obtained (such as movement, duration, intensity, direction, position, etc.) from blow detection may be translated into actions or gestures into the host system or receiving system of the signals, using preset patterns and sequences. The software or hardware receiving the data from detection system will use such patterns and sequences so as to determine actions which will be sent to the receiving system, which will in turn use them so as to interact with other applications or systems.

### Preferred embodiment

The most-disclosed interaction detection systems and having application in practical terms are roughly exclusively based in touch interaction methods (direct: Fingers, hands; indirect: Pens, position objects), visual detection (using cameras, presence sensors, etc), among others (temperature or ultrasonic sensors, etc). One might observe that these systems are normally designed for a specific type of detection or interaction and, consequently, for the detection or interaction in different methods one is impelled to use diverse systems.

The present invention refers to the reading of an electromagnetic field which was created in the vicinity of a capacitive grid, thus allowing a detection of several objects in the vicinity of or in contact with the said grid, and simultaneously allowing the exhalation detection of air and/or vapour (hereinafter designated blow) onto the said grid, and still the translation of the obtained data which reflect, among other characteristics, blow movement, duration and intensity into actions or action gestures within the host or receiving system.

The present invention refers to the effects of air and/or vapour exhalation (hereinafter designated blow) onto a capacitive grid and reading methods of charge variations caused onto the capacitive grid, thus allowing a detection of several objects in the vicinity of or in contact with the said grid, either with grounding or non-grounding lead, and simultaneously allowing the exhalation detection of air and vapour onto the said grid.

The invention will have preferable application in human/ computer interaction fields, using electronics technology based on capacitive phenomena.

So being, the present invention is useful in boosting the interaction abilities between electrical and electronic systems and the user, allowing its coexistence with touch detection systems, thus giving way for systems with diverse simultaneous interaction methods (among which touch and air and/or vapour exhalation are to be found) further providing the possibility of its application in systems which allow or require detection/interaction (either simultaneous or not) from different methods. These systems might be applied, for example, in entertainment, control and measuring situations, or as aids for individuals with physical disabilities.

Furthermore, the present invention describes how data reflecting, among other characteristics, movement, duration and intensity from blow detection may be translated into actions or action gestures into the host system or receiving system.

### Description of the drawings

Aiming for a better understanding of the invention, drawings have been herein attached which depict preferred embodiments of the invention which, however, do not intend to limit the scope of the present invention.
**Figure 1****:** Schematic illustration of the capacitive grid according to the present invention.
**Figure 2****:** Schematic illustration of an alternative grid allowing a broader coverage area, by duplicating each row and/or column trail.
**Figure 3****:** Schematic illustration of an alternative grid allowing a broader coverage area, by means of a zigzag trail for each row and/or column.
**Figure 4****:** Schematic illustration of an alternative grid allowing a broader coverage area, by means of conductive trails of relevant width to each row and/or column.
**Figure 5****:** Schematic illustration of a grid section with metal wires, in rows and columns.
**Figure 6****:** Schematic illustration of a grid section with conductive and transparent trails, in rows and columns.
**Figure 7****:** Schematic illustration of the equivalent circuit to each row-column intercept, wherein an equivalent "mixed" capacitor is arranged, corresponding to the direct capacitor between the selected row and column, to the capacitors between selected row and column and adjacent rows and columns, and to capacitors between adjacent columns and rows and following rows and columns. The capacitor equivalent to the variation in such "mixed" capacitor is also illustrated, which corresponds to the vicinity of an object, such as a finger.

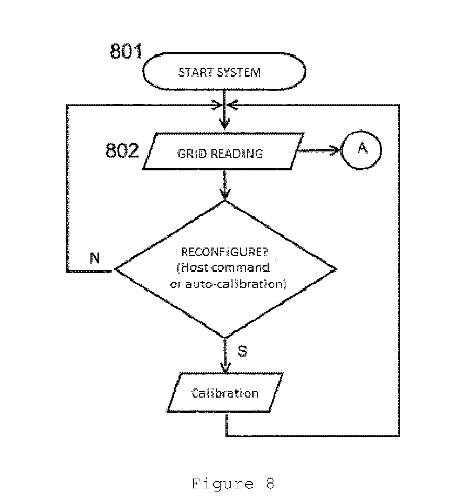

**Figure 8****:** Schematic illustration of the system's overall operating method.
**Figure 9****:** Schematic illustration of the capacitive grid's reading method.
**Figure 10****:** Schematic illustration of the capacitive grid's controller according to the present invention and respective host computer processing.
**Figure 11****:** Schematic illustration of the capacitive grid's signal controlling and processing circuit according to the present invention.
**Figure 12****:** Schematic illustration of the capacitive grid's signal controlling and processing circuit according to the present invention, providing an analogue-to-digital DAC converter option (1209) for differential operation.
**Figure 13****:** Schematic representation of the voltage levels corresponding to the minimum reference voltage (1303), to the maximum reference voltage (1304), to the signal meant to be converted (1301), to the voltage upon touch (1302), and when no touch occurs (1305, 1306).
**Figure 14****:** Schematic illustration of the detection of objects which are adjoining or in contact with the grid.
**Figure 15****:** Schematic illustration of the exhalation detection of (blow) onto the grid.
**Figure 16****:** Schematic illustration of the exhalation electrical behaviour on the grid with point-to-point detection system.
**Figure 17****:** Schematic illustration of the exhalation electrical behaviour on the grid with horizontal and vertical detection system.
**Figure 18****:** Schematic illustration of air and vapour (blow) exhalation effects onto a capacitive grid.
**Figure 19****:** Schematic illustration of a point-to-point detection system.
**Figure 20****:** Schematic illustration of a horizontal and vertical detection system.
**Figure 21****:** Schematic illustration of a point-to-point detection system with switching.
**Figure 22****:** Schematic illustration of a standard set of examples of data patterns or sequences.

### Additional preferred embodiments

The present invention refers to the effects of air and/or vapour exhalation (hereinafter designated blow) onto a capacitive grid, which is formed by rows (102', 202') and columns (103', 203'), designed in conductive material, which might be found within protection and/or support materials (101', 201'), and reading methods of charge variations caused onto the capacitive grid, thus allowing a detection of several objects in the vicinity of or in contact with the said grid (fig 14), and simultaneously allowing the exhalation detection of air and/or vapour (usually known as blow) onto the said grid (fig 15).

Touch detection (fig 14) and air and/or vapour exhalation detection (fig 15) may be actuated for simultaneous or independent operation.

Within the scope of the present invention, a body having no grounding lead and being electrically positive is to be understood as a vapour mass (505') created by exhaling from a living being (for example, a human) (501') or from vaporizers or other devices or systems which electrically charge (505') the mass thus obtained, by means of ionisable particle friction, for example, liquids (503') (example: water particles within the vapour obtained).

Therefore, taking human exhalation (501') as an example, be it by exhaling or blowing, a vapour mass (504') is created which is positively charged (505') due to the friction occurred between water particles and the walls along the trail from pulmonary alveolus to the mouth (503').

If this vapour mass is directed to the capacitive grid (502'), the charge capacity on the grid locations, which were affected by the vapour mass, increases due to the positive charge of the mass (it is able to absorb more electrons and subsequently free them through evaporation), thus increasing the current value at the "mixed" capacitors' outlet corresponding to such locations.

Given that touch and exhalation have opposed behaviours towards the capacitive grid (touch decreases charge capacity in action zone; vapour exhalation increases charge capacity in action zone), it becomes easy to detect the type of interaction which will occur and, should interactions be simultaneously detected, it will become easy to detect which depict touches and which depict exhalations.

For a horizontal and vertical detection circuit (fig. 20), the charge injection and detection is combined within a single pole (702', 703'), and thus allows reading of a row from the grid (701') mainly connecting it by one end to the said pole. The same process is applicable to the columns. In the present arrangement, in the case of a touch, it is only made possible to directly detect one simultaneous touch (however, it is possible to indirectly detect more touches by specific firmware or software), due to the fact that sensing is undertaken per row (706') and per column (705') (instead of per intercept point).

Therefore, upon a blow (704') onto a location on the grid (701'), the columns (401') and rows (402') on the grid (403') which go through such location, will have an increased current value until mass evaporation is complete.

As a result of such blow onto a location on the grid, the current value vectors (one vector corresponding to the column values and another vector corresponding to the row values), will enhance columns and rows with values above matrix average, during one or more grid readings.

By crossing these vectors, a two-dimensional system shall be obtained, that is, the coordinates of collision point or area between mass and grid.

The number of columns and rows affected, that is, the affected areas depend on several factors, such as: mass movement velocity, distance between mass exhalation point (mouth) and the capacitive grid, mass volume, area on the capacitive grid which is affected by the mass, after collision.

A point-to-point measuring circuit (fig 19) thus allows the detection of electrically-charged vapour masses in a two-dimensional space.

In a point-to-point detection circuit, the signal injection (602') is carried out in the rows and sensing (603') is carried out in the columns. In this configuration, and also due to the time required for mass evaporation (604'), a column hit by the mass shall be totally affected until complete evaporation (mass evaporation time is superior to the time required for column intercept readings), and the sensing circuit being mainly connected to the columns (301') of the grid (302') (that is, to the pole on the "mixed" capacitors outlet), all intercepts between such column and injection rows shall have an increase in current value which will be subsequently obtained in the sensing circuit (603'). Therefore, upon a blow (604') onto a location on the grid (601'), the column intercepts which go through such location, will have an increased current value until mass evaporation is complete.

As a result of such blow (604') onto a location on the grid (601'), the current value vector matrix corresponding to row and column intercepts, will enhance columns with values which are superior to the matrix average, during one or more grid readings.

The number of columns and rows affected, that is, the affected area depends on several factors, such as: mass movement velocity, distance between mass exhalation point (mouth) and the capacitive grid, mass volume, area on the capacitive grid which is affected by the mass, after collision.

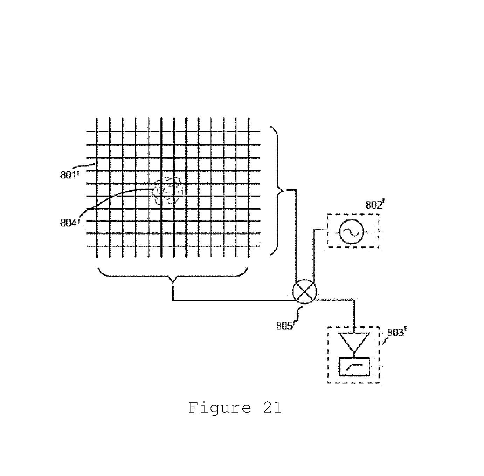

A point-to-point measuring circuit (fig 19) thus allows the detection of electrically-charged vapour masses (604', 804') in a capacitive grid (601, 801'), within a one-dimensional space (only in column axis). For the detection within a two-dimensional space, the circuit and respective software may be altered (fig 21) so as to, by switching (805') among rows and columns, the triggering signal injection (802') is carried out in rows and columns and sensing (803') (or acquisition) is carried out in columns and rows, respectively. Upon two consecutive readings from the grid (alternating between columns and rows, as previously described) sufficient data for the creation of a two-dimensional space in the grid (801') are thus obtained, wherein, in the case of collision of one or more masses onto the capacitive grid, one (or more) column and one (or more) row shall be "charged". The intercept between "charged" rows and columns will indicate the points or areas wherein the masses have collided with the capacitive grid.

Notwithstanding the reading being undertaken with vertical and horizontal measuring circuits or point-to-point measuring circuits, either within an one-dimensional or two-dimensional space, other data may be acquired, via software (for example, by means of history means of readings from the capacitive grid), such as: actuation time of the mass, direction of the mass, size of the mass, pressure on the mass, movement and intensity patterns.

The data thus obtained (such as movement, duration or actuation time of the mass, size or intensity, direction, position, etc.) from blow detection may be translated into actions or action gestures into the host system or receiving system of the signals, using preset patterns and sequences. Such patterns or sequences of obtained data may be mass movements along the grid, intensity differences during the time in which the mass is active, direction of the mass movement, etc.. The software or hardware receiving the data from detection system will use such patterns and sequences so as to determine actions which will be sent to the receiving system, which might in turn use them so as to interact with other applications or systems. The patterns and sequences may be created mainly from data obtained from blow detection and may be a combination of data obtained from blow detection and data obtained from touch detection.

The patterns or sequences may be pre-defined in hardware, firmware and/or software and may be altered or programmed, by means of an application or integrated system within the detection system and/or within the host system, so that they might be adjusted to the detection system in use, to desired action and to environment or physical limitations. New patterns and sequences may also be added so as to increase the action range or action gestures acknowledged, such as modifying and erasing patterns and sequences already existing.

The actions or action gestures boosted by patterns and sequences may be pointer movements (such as mouse pointers), key actuation and character transmission (such as slide, scroll, swivel, increase and decrease, zoom, rotation), executing and stopping applications, data exchange between applications, between systems and between applications and systems with local or remote connection.

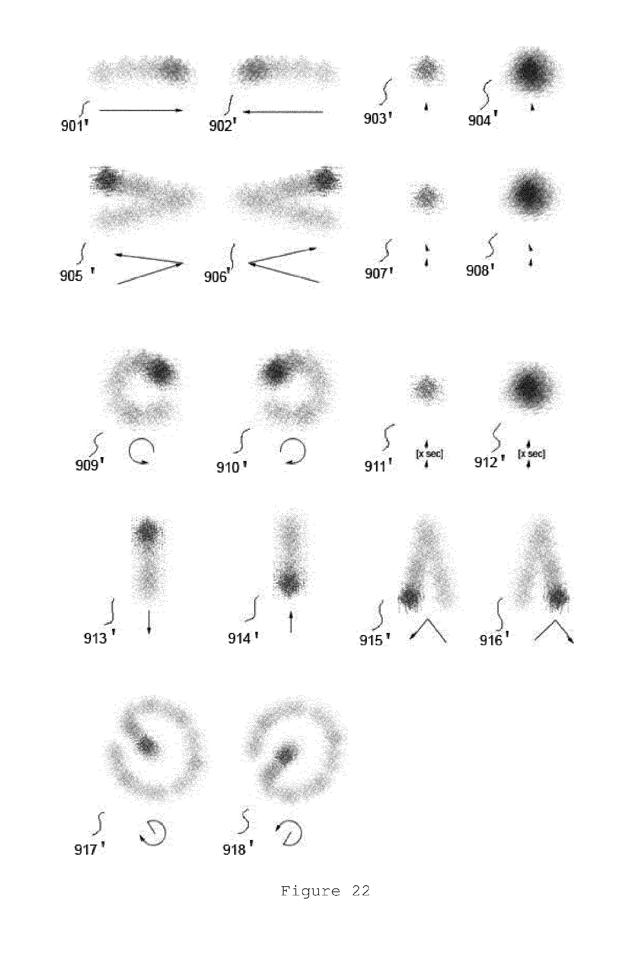

The present invention defines a standard set of data patterns or sequences (fig 22) having individually one action or action gestures associated thereto. These actions or action gestures are standard commands in interface systems, namely: Blow movement to the right (*"slidelscroll right*" command)(901'), blow movement to the left ("*slide*/*scroll left*") (902'), single blow ("click" command) (903'), strong single blow ("press" command) (904'), double blow (double "click" command) (907'), strong double blow ("click and press" command) (908'), Blow movement to the right followed by blow movement to the left (*"slide*/*scroll* right-left" command) (905'), blow movement to the left followed by Blow movement to the right (*"slide*/*scroll left-*right" command) (906'), blow rotation to the left ("rotate left" command) (909'), blow rotation to the right ("rotate right" command) (910'), blow duration/ intensity ("x seconds press" command) (911'), strong blow duration/ intensity ("x seconds high press" command)(912'), blow movement downwards ("*slide*/*scroll doran*" command) (913'), blow movement upwards ("*slide*/*scroll up*" command)(914'), undo with blow ("undo" command) (915'), redo with blow ("redo" command) (916'), increase with blow ("zoom in" command) (917'), decrease with blow ("zoom out" command) (918'). These data patterns or sequences may however have other associated actions or action gestures, using the integrated application or system within the detection system and/or host system hereinabove described, in order to modify the given associations.

Clearly, these blows and respective actions may be associated to other devices, inclusively those not being capacitive grids, provided that they allow blow or air mass detection, as well as the location thereof.

As an application example, additionally to what has been already described, one might also consider the configuration of the circuit disclosed in PT104765, which describes a point-to-point measuring circuit, which, after modifying reference range from analogue-to-digital conversion range so as to allow reading values above the corresponding value in idle state, allows detecting electrically-charged vapour masses within an one-dimensional space (merely on the column axis). For the detection within a two-dimensional space, the circuit and respective software may be altered so that alternatively the triggering signal injection is carried out in rows and columns and sensing (or acquisition) is carried out in columns and rows, respectively. Upon two consecutive readings from the capacitive grid (alternating between columns and rows, as previously described) sufficient data for the creation of a two-dimensional space are thus obtained, wherein, in the case of collision of one or more masses onto the capacitive grid, one (or more) column and one (or more) row shall be "charged". The intercept between "charged" rows and columns will indicate the points or areas wherein the masses have collided with the capacitive grid.

The following claims additionally define preferred embodiments of the present invention.

## Claims

1. Device for multipoint detection in capacitive grids comprising a surface, designated capacitive grid (111), comprising at least two sets of conductors, and a circuit for detecting capacity changes on the crosspoint between two conductors from different said sets (112), during the approach or contact of an object (710), namely a finger, and comprising:
a) a signal transmitter comprising:
i) a time-variable signal injector (1008):
ii) demultiplexer (1007) for selecting a conductor from a first set whereto the signal will be injected;
b) signal receiver and detector comprising:
i) demultiplexer (1010) for selecting another conductor from a second set where the injected signal is to be detected;
ii) signal amplifier (1009):
iii) demodulator or rectifier which converts the signal into one voltage;
iv) analogue-to-digital converter (1012), which converts the voltage into a numeral reading.

2. Device according to the preceding claim, wherein the analogue-to-digital converter (1012) is configured to operate in differential mode in comparison to one or more prereadings respective of each conductor pair intercept.

3. Device according to any preceding claim, wherein the analogue-to-digital conversion reference comprises two voltages, minimum (1303) and maximum (1304), respective of each conductor pair intercept, obtained from two or more prereadings.

4. Device according to any preceding claim, wherein the injected signal is an alternate and sine wave signal, with an average null value or null root-mean-square value between 50 and 300 KHz, having peak-to-peak amplitude between 10 to 24 volts.

5. Device according to any preceding claim, wherein the signal receiver further comprises a resistive-capacitive RC high-pass filter, which uses its own capacity between the two selected conductors.

6. Device according to any preceding claim, wherein the signal transmitter circuit is configured such that when the signal is injected into a given conductor, the remainder conductors are either disconnected, or maintained under high impedance or at a continuously steady voltage.

7. Device according to any preceding claim, wherein its elements are totally or partially transparent and further comprise a screen which is arranged above the capacitive grid (111).

8. Use of the device according to any preceding claim, wherein actions are determined by means of detecting pressure, intensity, dimension, direction, localization, movement patterns and sequences, duration or rate time of said air, vapour or blow masses (504'), and comprising its use in entertainment, control and measuring applications, or as an aid to physically-disabled individuals.

9. Method for multipoint detection in capacitive grids comprising the detection of capacity changes on the vicinity of one or more crosspoints (112), each one being arranged between two isolated electrical conductors, upon the approach or contact of an object (710), namely a finger or an air mass, or upon the approach or contact of an object (710) along a trail, namely a finger or an air mass; on a surface, designated capacitive grid (111) comprising at least two sets of conductors (101-105, 106-110), and comprising the following steps:
- selecting a first conductor (901) from a first set of conductors;
- injecting a time-variable signal;
- selecting a second conductor (901) from a second set of conductors;
- amplifying and rectifying the signal obtained (902) in the second conductor;
- converting the signal into digital and sending it to processing steps (903);
- selecting a further second conductor among the second set of conductors and repeating steps until enough information corresponding to the first conductor (906) has been obtained;
- selecting a further first conductor among the first set of conductors and repeating steps until enough information corresponding to the capacitive grid (907) has been obtained.

10. Method according to any preceding claim, wherein the said analogue-to-digital conversion (1208) operates in differential mode (1209) compared to one or more prereadings from each conductor pair intercept and/or using as reference (1211) of said analogue-to-digital conversion, two voltages, minimum and maximum, which are independent for each conductor pair intercept, obtained from two or more prereadings.

11. Method according to claim 9 or 10, wherein the injected signal is an alternate and sine wave signal, with an average null value or null root-mean-square value between 50 and 300 KHz, having peak-to-peak amplitude between 10 to 24 volts.

12. Method according to any claim 9 to 11, wherein subsequently to receiving the digital readings from the grid, a processing is undertaken, comprising one or more of the following steps:
a) thresholding: values, which are inferior to a minimum rate, are considered residuals and are invalidated;
b) moving average in time filter: Each value in each position is corrected by average considering the last readings from such position, on a temporal coherence basis;
c) Thresholding, per conductor set: Invalidation of those values inferior to a maximum value percentage of said set;
d) Smoothing: optionally, a smoothing might be applied on a spatial coherence basis, namely low-pass filters such as a Gaussian filter, neighbouring point average or median.

13. Method according to any claim 9 to 12, comprising the detection of pressure, intensity, dimension, direction, localization, movement patterns and sequences, duration or rate time of air, vapour or blow masses (504'), by means of detecting the position of the capacity (206') change, or changes, in said grid (502').

14. Method according to any claim 9 to 13, comprising the detection of touch and/or approach of elements having a grounding lead, such as parts of the human body or objects (105'), either manipulated or not, by one or more individuals or autonomous systems; and elements exempt from grounding lead and electrically positive, such as air, vapour or blow masses (205'); telling them apart by reducing or increasing capacity, respectively.

15. Method according to any claim 9 to 14, wherein the said elements are detected, either simultaneously or within a sequence, telling them apart by reducing or increasing capacity, respectively.

16. Method according to any claim 9 to 15, wherein actions are determined, when corresponding preset actuation and movement patters of said air, vapour or blow masses (504') are detected.

17. Method according to any claim 9 to 16, wherein further actions are determined, when touch and/or approach of elements comprising grounding lead, such as parts of the human body or objects (105'), are additionally detected.

18. Method according to any claim 9 to 17, comprising the definition of actions associated with preset actuation and movement patterns of said air, vapour or blow masses; and associated with the presence or absence of touch and/or approach of parts of the human body or objects; into one or combinations of:
a. pointer movements, key actuation and/or character transmission;
b. orders to interface systems, slide, scroll, swivel, increase and decrease, zoom and/or rotate orders;
c. run and stop applications, actuate information and data exchange between applications and/or actuate information and data exchange between systems and applications;
d. blow movement to the right (901'), blow movement to the left (902'), single blow - "click" command (903'), strong single blow - "press" command (904'), double blow - double "click" command (907'), strong double blow (908'), Blow movement to the right followed by blow movement to the left (905'), blow movement to the left followed by Blow movement to the right (906'), blow rotation to the left (909'), blow rotation to the right (910'), association of blow duration with blow intensity (911'), association of strong blow duration with strong blow intensity (912'), blow movement downwards (913'), blow movement upwards (914'), undo with blow (915'), redo with blow (916'), increase with blow (917'), and/or decrease with blow (918').
